# EUROPÄISCHE PATENTANMELDUNG

(11) **EP 2 600 622 A1**
(43) Veröffentlichungstag der Anmeldung: **05.06.2013**
(21) Anmeldenummer: 13157445.1
(22) Anmeldetag: 26.11.2008
(51) Int. Cl.: H04N 13/00

(54) **Aufnahmeeinheit einer Kamera zur Umgebungserfassung**

(30) Priorität: 26.11.2007 DE 102007057172
(62) Teilanmeldung aus: 08169991.0
(71) Anmelder: Silicon Micro Sensors GmbH, 01099 Dresden (DE)
(72) Erfinder: Busse, Erik, 04600 Altenburg (DE)
(74) Vertreter: Lippert, Stachow & Partner

(57) **Zusammenfassung**

wird eine Aufnahmeeinheit einer Kamera zur Umgebungserfassung beschrieben, die einen Bildsensor mit einem Objektiv zur Abbildung der Umgebung auf den Bildsensor aufweist, wobei Bildsensor und Objektiv durch einen Träger gehalten sind. Die Kamera weist außerdem eine Leiterplatte auf, die auf dem Träger angeordnet ist und zumindest die Signal-und Versorgungsleitungen des Bildsensors umfasst. Der Bildsensor ist auf einem Trägersubstrat montiert, das wie auch das Objektive auf dem Träger und dabei beabstandet zur Leiterplatte angeordnet ist und eine flexible elektrische Verbindung zur Leiterplatte aufweist.

## Beschreibung

Die Erfindung betrifft eine Aufnahmeeinheit einer Kamera zur Umgebungserfassung mit einem Bildsensor, dem ein Objektiv zur Abbildung der Umgebung auf den Bildsensor zugeordnet ist, wobei der Bildsensor durch einen Träger gehalten ist, und mit einer Leiterplatte, die auf dem Träger angeordnet ist und zumindest die Signal-und Versorgungsleitungen des Bildsensors aufweist.

Derartige Aufnahmeeinheiten werden für verschiedene Anwendungen, z.B. für Stereokameras, verwendet, um auf der Grundlage der optischen Erfassung und Auswertung der Umgebung die Bewegung einer mobilen Vorrichtung zu steuern. Zur Realisierung der möglichen Funktionen der Vorrichtung, zu deren Positionierung und auch zur Vermeidung von Kollisionen bei der Bewegung ist es erforderlich, Gegenstände der Umgebung und deren Abstand zur Vorrichtung laufend zu erfassen und einer Echtzeit-Auswertung zuzuführen.

Der Aufbau einer solchen Aufnahmeeinheit einer Kamera umfasst regelmäßig einen elektronischen Bildsensor, dem ein dem jeweiligen Anwendungsfall und auch dem Sensor angepasstes Objektiv zugeordnet ist. Der Bildsensor ist auf einer Leiterplatte montiert, auf der Signalleitungen, Versorgungsleitungen und gegebenenfalls zumindest Signalvorverarbeitungseinheiten angeordnet sind.

Die Leiterplatte einschließlich der beschriebenen Aufbauten ist auf einem Träger montiert. Über dem Bildsensor mit dem entsprechend dem optischen System des Objektivs erforderlichen Abstand ist das Objektiv angeordnet. Es ist so auf Träger und Leiterplatte montiert, dass der Bildsensor vollständig umhüllt ist und Licht nur durch die Linsen auf den Bildsensor fällt. Gegebenenfalls weist das Objektiv dafür ein eigenes Gehäuse auf.

Der Träger und ebenso dessen Verbindungen zur Leiterplatte und zum Objektiv oder dessen Gehäuse muss für die verschiedenen Anwendungsfälle unterschiedliche mechanische, thermische, chemische und elektrische Anforderungen erfüllen, wobei insbesondere die mechanische Stabilität für die Verwendung in mobilen Vorrichtungen zu gewährleisten ist. Aus diesem Grund sind die Träger meist aus Metall gefertigt.

Darüber hinaus beeinflusst das thermische Ausdehnungsverhalten des Trägers und der fest auf dem Träger montierten Leiterplatte die mit der Kamera aufgenommenen Bilder. Die unterschiedlichen Ausdehnungskoeffizienten beider miteinander verbundenen Materialien führen aufgrund der durch die elektronischen Komponenten während des Betriebs erzeugten Wärme zu einer Verschiebung der Bildsensoren relativ zu deren Objektiven. Aufgrund dessen werden z.B. bei längerem Betrieb, insbesondere bei einer Stereokamera, Verluste in der Bildqualität festgestellt. So sind Beeinträchtigungen durch Streulicht bedingt, welches durch defekte Verbindungen zwischen dem Träger und dem Objektiv auf einen Bildsensor fällt. Die Verbindung zwischen Träger und Objektiv sind meist Klebeverbindungen, die infolge der thermischen Ausdehnungen von Träger und Objektiv abreißen können.

Der Erfindung liegt somit die Aufgabe zugrunde, eine Aufnahmeeinheit einer Kamera anzugeben, die eine zeitlich stabile Optik der Aufnahmeeinheit auch bei thermischer und mechanischer Belastung gewährleistet.

Mit der unten beschriebenen Aufnahmeeinheit wird eine Beeinflussung deren optischer Achse der Aufnahmeeinheit insbesondere durch die Leiterplatte oder durch die Verbindung von Leiterplatte mit dem Träger bei mechanischer oder thermischer Belastung der Kamera verhindert. Sowohl das Objektiv als auch der Bildsensor weisen eine mechanische Verbindung nur noch zum Träger auf.

Durch diese Entkopplung der Optik von der Leiterplatte kann die Lage und der Winkel der optischen Achse zeitlich sehr stabil eingestellt werden. Es wurde eine Drift der optischen Achse von weniger als einem Pixel festgestellt und zwar sowohl bei einer mechanischen Schockbelastung von bis zur 150fachen Erdbeschleunigung als auch bei Betriebstemperaturen im Bereich zwischen -20°C bis 70°C. Diese Werte konnten mit einem Träger erzielt werden, der eine geringere Materialstärke aufweist als die bekannten Träger, so dass insbesondere für hochwertige Materialien eine Kostenersparnis erzielbar ist.

Darüber hinaus sind infolge der Anordnung des Bildsensors auf einem Trägersubstrat und infolge einer flexiblen Kontaktierung zwischen Leiterplatte und dem Trägersubstrat die bekannten elektronischen Bildsensoren und Objektive verwendbar. So sind in Abhängigkeit von der Gestaltung des Objektivs Bildsensoren sowohl mit Gehäuse als auch ungehäust verwendbar, wobei die gehäusten Bildsensoren es ermöglichen, die Montage der Kamera außerhalb von Reinraumatmosphäre durchzuführen.

Der höheren mechanischen und thermischen Belastungsfähigkeit der Kamera wird auch die Montage des Objektivs auf dem Träger gerecht, indem das Objektiv mittels eines Objektivhalters über dem Bildsensor angeordnet ist und dabei einen, mit Ausnahme des optischen Pfades des Objektivs, optisch dichten Hohlraum um den Bildsensor schafft. Damit ist eine großflächigere Befestigung des Objektivs möglich, die bei Einhaltung einer Fuge zwischen beiden zu verbindenden Komponenten und der Verwendung von flexiblem Fugenmaterial zur Herstellung der Verbindung mechanische Spannungen zwischen Träger und Objektivhalter auszugleichen vermag. Auf diese Weise kann das Abreißen der Verbindung über einen großen thermischen und mechanischen Belastungsbereich vermieden werden.

Darüber hinaus gestattet die Herstellung eines Hohlraumes um den Bildsensor auch die Verwendung ungehäuster Bauelemente, sofern es die Leistungsanforderungen an den Bildsensor erfordern. Es ist selbstverständlich, dass innerhalb des Hohlraumes gleichermaßen gehäuste Bauelemente verwendbar sind.

Durch die Anordnung eines Hohlraumes um den Bildsensor und damit um das Trägersubstrat ist es des Weiteren möglich, die flexible elektrische Verbindung zwischen dem Bildsensor und den Leitbahnen der Leiterplatte vor Beschädigungen zu schützen, indem die flexible Verbindung innerhalb des Hohlraumes angeordnet wird. Zu diesem Zweck kann der Objektivhalter einen Durchgang aufweisen, durch welchen die Leiterbahn in den Hohlraum ragen kann. Um an dieser Stelle eine vergleichbare Verbindung zu realisieren, besteht auch zwischen Objektivhalter und Leiterplatte eine solche Fuge, wie zwischen dem Objektivhalter und dem Träger. Diese Fuge zur Leiterplatte wird auf die gleiche Art verschlossen, wie die übrige zum Träger.

Z.B. weist Silikon die erforderlichen Klebeeigenschaften ebenso auf, wie die erforderliche Flexibilität über einen großen Temperaturbereich und die chemische Beständigkeit.

Die Erfindung soll nachfolgend anhand eines Ausführungsbeispieles näher erläutert werden. In der zugehörigen Zeichnung zeigt die
- Fig.: eine Aufnahmeeinheit einer Kamera in Schnittdarstellung.

Die Kamera umfasst einen plattenartigen Träger 3 mit rechteckiger Grundfläche, der im vorliegenden Ausführungsbeispiel aus Edelstahl ist. Der Träger 3 weist ein Podest 5 auf, auf welchem ein auf einem flachen, nicht näher dargestellten Trägersubstrat 8 ein elektronischer Bildsensor 1 aufliegt. Das Podest 5 weist eine Auflagefläche auf, die etwas größer ist als das Trägersubstrat 8.

Über dem Bildsensor 1 und mit einem Abstand zu diesem ist mittels eines Objektivhalters 11 ein Objektiv 9 angeordnet. Ein Bildsensor 1 und ein Objektiv 9 bilden jeweils eine Aufnahmeeinheit. Als Objektiv 9 soll ein optisches System bezeichnet sein, welches verschiedene optische Elemente wie Linsen oder Spiegel oder andere umfasst und ein Objekt auf dem Bildsensor 1 abbildet. Der Fokus der Objektive 9 kann in verschiedenen Ausführungsformen fest eingestellt sein, als Fix-Fokus-System bekannt, oder im eingebauten Zustand einstellbar sein, so dass erst nach dem Einbau des Objektivs 9 entsprechend dem dann vorliegenden Abstand zwischen Objektiv 9 und Bildsensor 1 die scharfe Abbildung von Gegenständen bestimmter Entfernungen eingestellt wird.

Neben dem Podest 5 und mit einem Abstand zu diesem ist auf dem Träger 3 eine Leiterplatte 13 angeordnet, die eine elektronische Schaltung (nicht näher dargestellt) mit integrierten Schaltkreisen, aktiven und passiven Schaltungselementen und den dafür erforderlichen Leiterzügen sowie Leiterbahnen (nicht näher dargestellt) zur Signalleitung zu und von den Bildsensoren 1 sowie zur Spannungsversorgung der Bildsensoren 1 aufweist. Die elektronische Schaltung umfasst z.B. die Steuerung der Aufnahmeeinheit unter anderem zur Aufnahme der Bilder, die Spannungsversorgung des Bildsensors 1 oder eine Einheit zur Vorverarbeitung der von dem Bildsensor 1 empfangenen Signale, in der die Signale für die Weiterleitung an eine Auswertungseinheit aufbereitet werden. Zur Signalübertragung zwischen diesen Komponenten der Leiterplatte 13 und des Bildsensors 1 und zur Spannungsversorgung des Bildsensors 1 ist das Trägersubstrat 8 des Bildsensors 1 über flexible Verbindungen 15 mit der Leiterplatte 13 elektrisch verbunden. Für die flexiblen elektrischen Verbindungen 15 von Bauelementen sind aus der Halbleitertechnologie verschiedene, auch für diese Anwendung geeignete Ausführungsformen bekannt, wie z.B. die Verbindung mittels Drahtbrücken. Der Bildsensor 1 ist durch das Trägersubstrat 8 elektrisch kontaktiert (nicht näher dargestellt).

Der Objektivhalter 11 der Aufnahmeeinheit hält, schützt und positioniert ein Objektiv 9, d.h. ein optisches System zur Abbildung der die mobile Vorrichtung umgebenden Objekte und hat die Form eines Quaders. Das optische System besteht entsprechend der Anforderungen an die Abbildung der Umgebung aus mehreren verschiedenen optischen Elementen, ist hier zur besseren Übersicht jedoch lediglich als eine Linse dargestellt. Für die beschriebene Stereokamera sind auch Standardausführungen von Objektiven 9 verwendbar.

Der Objektivhalter 11 weist auf seiner dem Träger 3 zugewandten Seite eine Senke 17 auf, deren Grundfläche 18 größer ist als das Podest 5, auf welchem der auf einem Trägersubstrat 8 angeordnete Bildsensor 1 aufliegt. Der Objektivhalter 11 ist so auf dem Träger 3 angeordnet, dass sich die Senke 17 über das Podest 5 und den Bildsensor 1 wölbt, mit einem definierten Abstand zwischen der Grundfläche 18 der Senke 17 und dem Bildsensor 1.

Die Tiefe der Senke 17 ist so ausgebildet und der Objektivhalter derart angeordnet, dass der Objektivhalter 11 umlaufend mit einer Fuge 21 über dem Träger 3 endet, zu diesem aber keinen direkten mechanischen Kontakt hat.

Eine ebensolche Fuge 21 weist der Objektivhalter 11 auch zur Leiterplatte 13 auf, die sich durch einen flachen Durchgang 23 im Objektivhalter 11 bis in den Hohlraum erstreckt, der um das Podest 5 durch die Senke 17 gebildet wird. Die Fuge 21 des Objektivhalter 11 zum Träger 3 sowie zur Leiterplatte 13 ist umlaufend mit einem flexiblen Fugenmaterial 25 geschlossen, so dass aufgrund der optisch dichten Materialien des Objektivhalters 11 und des Fugenmaterials 25 der Hohlraum optisch dicht ausgebildet ist, mit dem einzig möglichen Strahlungseinfall durch das über dem Bildsensor 1 positionierte Objektiv 9. Die Verwendung von flexiblem Fugenmaterial 25 ermöglicht den Ausgleich von thermisch bedingten Spannungen zwischen den meist unterschiedlichen Materialien von Träger 3 und Objektivhalter 11. Die optische Dichtheit erstreckt sich nicht nur auf das sichtbare Licht, sondern kann sich auch auf alle die Wellenlängenbereiche beziehen, die für die Erfassung der Umgebung in dem jeweiligen Anwendungsfall verwendbar ist.

Das Fugenmaterial 25 erfüllt in dem dargestellten Ausführungsbeispiel gleichzeitig die Funktion der Befestigung des Objektivhalters 11 auf dem Träger 3, indem es Klebeeigenschaften aufweist. Alternativ können auch besondere Befestigungsmittel am Objektivhalter 11 und am Träger 3 angeordnet sein.

Die Fixierung der genauen lateralen Position des Objektivhalters 11 zum Bildsensor 1 und auch dessen winklige Ausrichtung ist durch die Anordnung von Haltemitteln 27 am Objektivhalter 11 realisiert, die in jeweils eine Aussparung 29 im Träger 3 hineinragen. Durch die Anzahl, Lage und Gestaltung der Haltemittel 27 und Aussparungen 29 ist es möglich, eine eindeutige Zuordnung eines bestimmten Objektivhalters 11 zur Aufnahmeeinheit und zu seiner exakten Position zu definieren, so dass dessen Montage zumindest auch teilautomatisiert möglich ist.

Eine Funktion der Haltemittel 27 ist die Fixierung des Objektivhalters 11 in seiner Position auch bei mechanischer Beanspruchung, da diese bei der oben beschriebenen Verklebung von Objektivhalter 11 und Träger 3 mittels flexiblen Material nicht durch die Klebeverbindung zu gewährleisten ist. Zu diesem Zweck sind die Höhe der Haltemittel 27 und die Tiefe der Aussparung 29 so groß gewählt, dass zwischen den beiden sich gegenüber liegenden Grundflächen 31, 33 von Haltemittel 27 und Aussparung 29 ein Abstand verbleibt. Gleichermaßen sind die Querschnitte von Haltemittel 27 und Aussparung 29 überall so groß, dass auch hier umlaufend um das Haltemittel 27 ein Zwischenraum zur seitlichen Wandung der Aussparung 29 verbleibt.

Der das Haltemittel 27 umgebende Abstand und Zwischenraum ist mit einer aushärtbaren Masse verfüllt, die im dargestellten montierten Zustand der Aufnahmeeinheit ausgehärtet ist. Diese Masse führt während ihres Aushärtens, bei dem das Haltemittel 27 in die Masse versenkt ist, infolge des mit dem Aushärten verbundenen Schrumpfungsprozesses, infolge der unten beschriebenen besonderen Form des Haltemittels 27 und infolge des auch unterhalb des Haltemittels 27 vorhandenem Material zu einer Zugbelastung auf das Haltemittel 27 in die Aussparung 29 hinein.

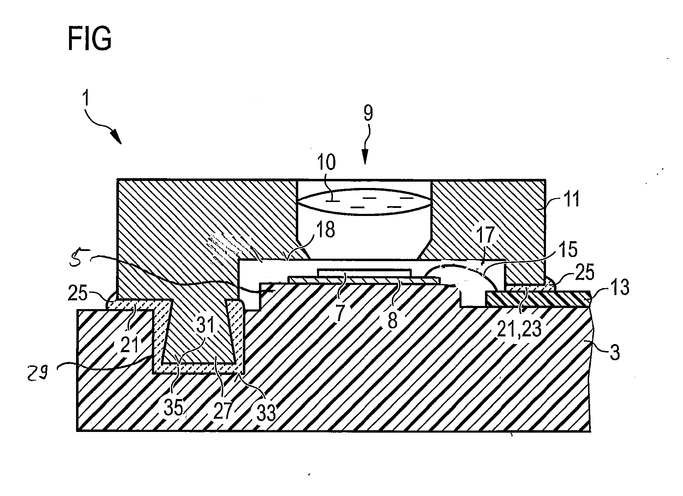

Zur Ausbildung einer Angriffsfläche am Haltemittel 27 für die während des Schrumpfungsprozesses auftretende, in die Aussparung 29 wirkende Kraft ist das Haltemittel 27 so geformt, dass sein Querschnitt, d.h. die zur Grundfläche 31 des Haltemittels 27 parallel liegende, gedachte Schnittfläche, zur Grundfläche 31 hin größer wird. Diese Form des Haltemittels 27 ist z.B. durch eine regelmäßige konische Gestaltung realisierbar. Jedoch auch andere Gestaltungen sind möglich, z.B. ein schiefer oder einseitiger Konus, wie in Fig. 1 dargestellt, oder eine sprunghafte Vergrößerung infolge einer Kante, solange die aushärtbare Masse beim Eintauchen des Haltemittels 27 oder beim nachträglichen Verfüllen des Zwischenraumes in der Aussparung 29 mit der Masse das Haltemittel 27 vollständig umhüllt und die durch das Schrumpfen der Masse nach unten wirkende Zugkraft am Haltemittel 27 eine Angriffsfläche hat.

### Bezugszeichenliste

- 1: Aufnahmeeinheit
- 3: Träger
- 5: Podest
- 7: Bildsensor
- 8: Trägersubstrat
- 9: Objektiv
- 11: Objektivhalter
- 13: Leiterplatte
- 15: flexible Verbindung
- 17: Senke
- 18: Grundfläche der Senke
- 21: Fuge
- 23: Durchgang
- 25: Fugenmaterial
- 27: Haltemittel
- 29: Aussparung
- 31: Grundfläche des Haltemittels
- 33: Grundfläche der Aussparung
- 35: aushärtbare Masse, aushärtbares Material

## Patentansprüche

1. Aufnahmeeinheit einer Kamera zur Umgebungserfassung mit einem Bildsensor (1), dem ein Objektiv (9) zur Abbildung der Umgebung auf den Bildsensor (1) zugeordnet ist, wobei der Bildsensor (1) durch einen Träger (3) gehalten ist, und mit einer Leiterplatte (13), die auf dem Träger (3) angeordnet ist und zumindest die Signal-und Versorgungsleitungen des Bildsensors (1) aufweist, **dadurch gekennzeichnet, dass** der Bildsensor (1) auf einem separaten Trägersubstrat (8) montiert ist, das Objektiv (9) und das Trägersubstrat (8) auf dem Träger (3) und beabstandet zur Leiterplatte (13) angeordnet ist und der Bildsensor (1) mittels flexibler Verbindungen (15) mit den Signal-und Versorgungsleitungen verbunden ist.

2. Aufnahmeeinheit einer Kamera nach Anspruch 1, **dadurch gekennzeichnet, dass** ein Objektivhalter (11) des Objektivs (9) aus optisch dichtem Material besteht und mit dem Träger (3) einen Hohlraum um den Bildsensor (1) bildet, indem der Objektivhalter (11) optisch dicht auf dem Träger (3) montiert ist.

3. Aufnahmeeinheit einer Kamera nach Anspruch 2, **dadurch gekennzeichnet, dass** der Objektivhalter (11) einen Durchgang (23) aufweist, durch welchen die Leiterplatte (13) in den Hohlraum ragt, so dass eine Fuge (21) zwischen dem Objektivhalter (11) und der Leiterplatte (13) besteht und dass die Fuge (21) mit flexiblen und optisch dichtem Fugenmaterial (25) verschlossen ist.

4. Aufnahmeeinheit einer Kamera nach einem der Ansprüche 2 oder 3, **dadurch gekennzeichnet, dass** der Objektivhalter (11) umlaufend mit einer Fuge (21) über dem Träger (3) angeordnet ist und die Fuge (21) mit einem flexiblen und optisch dichtem Fugenmaterial (25) geschlossen ist.

5. Aufnahmeeinheit einer Kamera nach einem der Ansprüche, **dadurch gekennzeichnet, dass** der Objektivhalter (11) mittels des Fugenmaterials (25) auf dem Träger (3) durch Kleben befestigt ist.

6. Aufnahmeeinheit einer Kamera nach einem der Ansprüche 3 bis 5, **dadurch gekennzeichnet, dass** das Fugenmaterial (25) Silikon ist.

7. Aufnahmeeinheit einer Kamera nach einem der Ansprüche 2 bis 6, **dadurch gekennzeichnet, dass** der Objektivhalter (11) Haltemittel (27) aufweist, die sich in Aussparungen (29) im Träger (3) erstrecken und deren parallel zur Grundfläche (33) der Aussparungen (29) liegenden Querschnittflächen zur Grundfläche (33) hin größer werden, dass jedes Haltemittel (27) so weit in eine Aussparung (29) des Trägers (3) ragt, dass zwischen der Grundfläche (31) des Haltemittels (27) und der Grundfläche (33) der Aussparung (29) ein Zwischenraum besteht und dass der das Haltemittel (27) umgebende Raum der Aussparung (29) einschließlich besagten Zwischenraums mit einem aushärtbaren Material (35) ausgefüllt ist.

8. Aufnahmeeinheit einer Kamera nach einem der vorstehenden Ansprüche, **dadurch gekennzeichnet, dass** der Fokus des Objektivs (9) einstellbar ist.

9. Aufnahmeeinheit einer Kamera nach einem der vorstehenden Ansprüche, **dadurch gekennzeichnet, dass** der Bildsensor (1) gehäust ist.

10. Aufnahmeeinheit einer Kamera nach einem der vorstehenden Ansprüche, **dadurch gekennzeichnet, dass** der Träger (3) aus Metall besteht.
